# EUROPÄISCHE PATENTANMELDUNG

(11) **EP 1 840 294 A2**
(43) Veröffentlichungstag der Anmeldung: **03.10.2007**
(21) Anmeldenummer: 06026854.7
(22) Anmeldetag: 23.12.2006
(51) Int. Cl.: E04D 13/10

(54) **Anordnung zur Erfassung einer Schneelast auf einem Dach eines Gebäudes**

(30) Priorität: 29.03.2006 DE 10614813
(71) Anmelder: Pro-Micron GmbH&Co. KG Modular Systems, 87600 Kaufbeuren (DE); Planungsbüro J. Dobler GmbH & Co., 87600 Kaufbeuren (DE)
(72) Erfinder: Huber, Richard, Dr., 87656 Germaringen (DE); Wulff, Kolja, Dr.-Ing., 87600 Kaufbeuren (DE); Bonerz, Stefan, Dipl.-Ing., 87600 Kaufbeuren (DE); Dobler, Peter, 87600 Kaufbeuren (DE)
(74) Vertreter: Gehrsitz, Stefan

(57) **Zusammenfassung**

Die Erfindung betrifft eine Anordnung (1) zur Erfassung einer Schneelast auf einem Dach (2) eines Gebäudes, welche auf dem Dach (2) angeordnet wird und ein Sensorelement (3) zur Erfassung der Schneelast aufweist, welches ein Signal (S) erzeugt, dessen Wert ein Maß für die auf dem Dach (2) liegende Schneelast ist. Um eine solche Anordnung zur Schneelast-Erfassung weniger störungsanfällig zu machen und die auf dem Dach liegende mittlere Schneelast zuverlässig zu erfassen ist vorgesehen, dass die Anordnung (1) eine Schicht (4) aus einem Dämmstoff umfasst und dass das Sensorelement (3) an der Unterseite (4b) der Dämmstoffschicht (4) angeordnet oder in diese eingebettet ist.

## Beschreibung

Die Erfindung betrifft eine Anordnung zur Erfassung einer Schneelast auf einem Dach eines Gebäudes nach dem Oberbegriff des Anspruchs 1.

Aus der DE 101 29 992 A1 ist eine Vorrichtung zur Beseitigung von Eis oder Schnee bei Leichtbaugebäuden bekannt, welche über einen solchen Sensor zur Erfassung der Eis- oder Schneelast verfügt. Mit dem Sensor ist eine Steuereinrichtung verbunden, welche eine Einrichtung zum Entfernen der Eis- oder Schneelast aktiviert, wenn durch den Sensor ein vorgegebener Grenzwert einer maximal zulässigen Eis- oder Schneelast detektiert worden ist. Als Sensor wurde ein auf Zug und/oder Druck zu beanspruchender Sensor wie zum Beispiel Dehnmessstreifen, Wägezellen oder Druckdosen an der Dacheindeckung, dem Fundament oder der Konstruktion des Leichbaugebäudes vorgeschlagen. Weiterhin wurden optische und akustische Sensoren vorgeschlagen.

Die in der DE 101 29 992 A1 vorgeschlagenen Sensoren zur Erfassung der Schneelast sind zum Teil relativ ungenau, da sie die Schneelast nur lokal begrenzt an bestimmten Stellen auf dem Dach erfassen können. Zum anderen sind die auf der Oberseite des Daches angeordneten Sensoren anfällig gegen Verschmutzung oder Witterungseinflüsse, was dazu führen kann, dass der Sensor gerade in der typischen Anwendungszeit im Winter bei starken Witterungseinflüssen durch Kälte, Wind und Schnee nicht funktioniert oder störungsanfällig ist.

Hiervon ausgehend liegt der Erfindung die Aufgabe zu Grunde, eine Anordnung zur Erfassung einer Schneelast auf einem Dach eines Gebäudes aufzuzeigen, die weniger störungsanfällig ist und zuverlässig die mittlere Schneelast erfassen kann, die auf dem Dach liegt.

Gelöst wird diese Aufgabe mit einer Anordnung mit den Merkmalen des Anspruchs 1. Vorteilhafte Ausgestaltungen dieser Anordnung sind den Unteransprüchen 2 bis 12 zu entnehmen und die abhängigen Ansprüche 13 bis 15 beziehen sich auf ein Dach eines Gebäudes, auf dem eine solche Anordnung zur Erfassung der Schneelast angeordnet ist.

Nach der Erfindung wird die Aufgabe mit einer Anordnung gelöst, die auf dem Dach eines Gebäudes angeordnet wird und ein Sensorelement zur Erfassung der Schneelast aufweist, welches ein Signal erzeugt, dessen Wert ein Maß für die auf dem Dach liegende Schneelast ist, wobei diese Anordnung eine Schicht aus einem Dämmstoff umfasst und das Sensorelement an der Unterseite der Dämmstoffschicht angeordnet oder in diese eingebettet ist.

Durch die Anordnung des Sensorelements an der Unterseite der Dämmstoffschicht bzw. durch die Einbettung des Sensorelements in diese Dämmstoffschicht wird zum einen gewährleistet, dass das Sensorelement vor Witterungseinflüssen, insbesondere Wind und Feuchtigkeit, geschützt wird. Zum anderen wird erreicht, dass das Sensorelement nicht lediglich lokal eine auf das Sensorelement einwirkende Schneelast erfasst, sondern die Schneelast über einen größeren räumlichen Bereich gemittelt erfassen kann, weil der auf das Sensorelement einwirkende Druck durch die darüber liegende Dämmstoffschicht räumlich vergleichmäßigt wird.

Bevorzugt handelt es sich bei dem Sensorelement um ein kapazitives Sensorelement, insbesondere um einen Kondensator, dessen Kondensatorplatten bei Einwirkung einer Drucklast auf die Dämmstoffschicht zusammengedrückt werden, wodurch sich die Kapazität des Sensorelements ändert. Diese Kapazitätsänderung wird in ein elektrisches Signal umgewandelt, welches entweder über eine drahtgebundene Leitung oder drahtlos an eine Auswerteeinheit übermittelt wird, welche den Wert des elektrischen Signals, der proportional zu der auf der Dämmstoffschicht liegenden Schneelast ist, anzeigt.

Bei der Dämmstoffschicht handelt es sich bevorzugt um eine Schicht aus Styropor oder einem Kunststoff, beispielsweise aus PU oder PSE oder einem Schaumstoff. Diese Dämmstoffschicht mit dem integrierten Sensorelement kann auf einfache Art und Weise in eine Isolierschicht eingefügt werden, welche üblicherweise sowieso zur thermischen Isolierung auf der Oberseite der Dacheindeckung vorgesehen ist. Es ist beispielsweise üblich, bei Flachdächern mit einer Trapezblech-Eindeckung auf der Oberseite der Trapezbleche eine Isolierschicht aus Styropor anzuordnen. In diese Isolierschicht kann die Dämmstoffschicht mit dem integrierten Sensorelement bei der Isolierung des Daches eingefügt werden. Die Dämmstoffschicht mit integriertem Sensorelement kann auch nachträglich noch in die Isolierschicht eingefügt werden, indem aus der bereits verlegten Isolierschicht ein Bereich herausgeschnitten wird, in den dann die Dämmstoffschicht mit dem integrierten Sensorelement der erfindungsgemäßen Anordnung bündig eingesetzt werden kann.

Die Erfindung wird nachfolgend anhand eines Ausführungsbeispiels unter Bezugnahme auf die begleitenden Zeichnungen näher erläutert. Die Zeichnungen zeigen:
- **Figur 1**:: Schematische Darstellung eines Gebäudedaches, welches mit einer Anordnung zur Erfassung der Last des auf dem Dach liegenden Schnees ausgestattet ist;
- **Figur 2**:: Schematische Darstellung eines Sensorelements, welches bei der erfindungsgemäßen Anordnung zur Erfassung der Schneelast eingesetzt werden kann;
- **Figur 3**:: Eine alternative Ausführungsform eines Sensorelements.

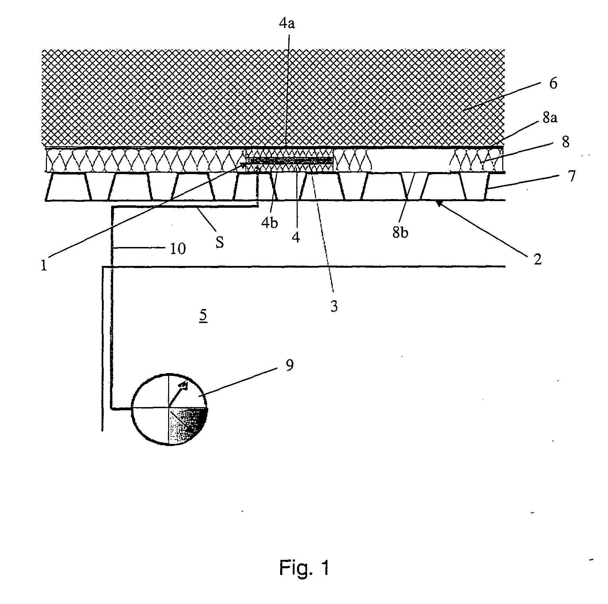

In Figur 1 ist eine Dachkonstruktion 2 dargestellt, welche über eine Dacheindeckung aus einem Trapezblech 7 verfügt. Auf dem Trapezblech 7 ist eine Isolierschicht 8 angeordnet. Bei dieser Isolierschicht 8 kann es sich beispielsweise um Styroporplatten oder um Kunststoff-oder Schaumstoffplatten handeln. Die Oberseite 8a der Isolierschicht 8 ist wasserdicht ausgebildet oder durch eine wasserdichte Beschichtung, beispielsweise verschweißte Kunststoff- oder Bitumenbahnen abgedeckt. Bei starkem Schneefall bleibt insbesondere bei Flachdächern der in Figur 1 mit Bezugszeichen 6 bezeichnete Schnee auf der Oberseite der Isolierschicht 8 liegen und drückt auf die Dachkonstruktion. Bei ansteigender Schneelast besteht häufig die Gefahr, dass die Dachkonstruktion Schaden erleidet oder sogar zusammenstürzt.

Um dies zu Verhindern ist auf der Dachkonstruktion die erfindungsgemäße Anordnung 1 zur Erfassung der auf das Dach 2 einwirkenden Schneelast vorgesehen. Diese Anordnung 1 umfasst eine Schicht 4 aus einem Dämmstoff, beispielsweise aus Styropor oder einem Kunst-oder Schaumstoff. Es kann sich bei der Dämmstoffschicht 4 auch um ein Abstandsgestrick oder -gewirke handeln mit einer Unterseite und einer Oberseite aus einem Gestrick bzw. Gewirke und dazwischen angeordneten Abstandsfäden in Form von Kunststoff-Filamenten. In diese Dämmstoffschicht 4 ist wie bei dem Ausführungsbeispiel von Figur 1 gezeigt ein Sensorelement 3 zur Erfassung einer Drucklast, die auf die Dämmstoffschicht einwirkt, eingebettet. Alternativ zu dem in Figur 1 zeichnerisch dargestellten Ausführungsbeispiel kann das Sensorelement 3 auch an der Unterseite 4b der Dämmstoffschicht 4 angeordnet sein.

Bei dem Sensorelement 3 handelt es sich bevorzugt um ein kapazitives Sensorelement, insbesondere um einen Kondensator, dessen Kondensatorplatten in unbelastetem Zustand einen vorgegebenen Abstand aufweisen. Bei Druckeinwirkung auf die Oberseite 4a der Dämmstoffschicht 4 werden die Kondensatorplatten näher zueinander gebracht, wodurch sich die Kapazität des Kondensators ändert. Diese Kapazitätsänderung wird, in ein elektrisches Signal S umgewandelt, welches entweder über eine drahtgebundene Leitung oder drahtlos an eine Auswerteeinrichtung 5 übermittelt werden. Bei der in Figur 1 dargestellten Ausführungsform ist eine elektrische Leitung 10 vorgesehen, mit der das Signal S vom Sensorelement 3 an die Auswerteeinheit 5 übermittelt wird. Diese Leitung 10 wird durch eine Öffnung durch die Dacheindeckung ins Innere des Gebäudes zur Auswerteeinrichtung 5 geführt. Alternativ zu dieser drahtgebundenen Übermittlung des Signals S kann auch eine drahtlose Signalübermittlung vorgesehen sein, beispielsweise über Funk oder eine W-LAN-Einrichtung. Zur Energieversorgung kann auf dem Dach eine Solarzelle mit Speicherfunktion vorgesehen sein, welche das Sensorelement 3 mit elektrischer Energie versorgt.

Die Auswerteeinrichtung 5 verfügt über eine Anzeige 9, auf der der Wert des elektrischen Signals, der proportional zu der auf der Dämmstoffschicht 4 liegenden Drucklast ist, angezeigt wird. Die Auswerteeinrichtung 5 kann darüber hinaus über eine Alarmeinrichtung verfügen, die in Warnsignal ausgibt, sobald die erfasste Drucklast, die durch den auf dem Dach 2 liegenden Schnee 6 hervorgerufen wird, einen vorgegebenen Grenzwert überschreitet.

Wie in der Ausführungsform von Figur 1 gezeigt, ist die Dämmstoffschicht 4 der erfindungsgemäßen Anordnung 1 in die Isolierschicht 8, die auf der Dacheindeckung (Trapezblech 7) aufliegt, bündig eingefügt. Um Feuchtigkeitseintritt zu verhindern, werden die Nahtstellen zwischen der Dämmstoffschicht 4 der Anordnung 1 und der Isolierschicht 8 beispielsweise durch einen Kleber oder ein Fugenband abgedichtet.

Um möglichst über die gesamte Dachfläche die auf dem Dach liegende Schneelast erfassen zu können, ist vorgesehen, dass mehrere Anordnungen 1 zur Erfassung der Schneelast in die Isolierschicht 8 eingefügt werden, wobei die Anordnungen 1 räumlich gleichmäßig über die Dachfläche verteilt angeordnet werden. Die einzelnen Signale S, die von den Sensorelementen 3 jeder Anordnung 1 erzeugt werden, werden alle an die Auswerteeinrichtung 5 übermittelt, welche aus den Einzelwerten einen Mittelwert ermittelt und diesen auf der Anzeige 9 anzeigt.

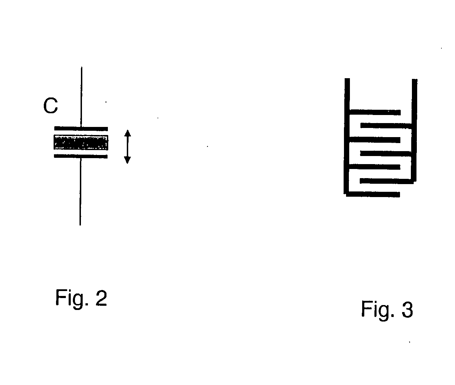

In Figur 2 ist schematisch die oben beschriebene Ausführungsform des Sensorselements 3 als Kondensator dargestellt. Figur 3 zeigt eine alternative Ausführungsform für ein Sensorelement 3 zur Erfassung einer Drucklast. Es handelt sich hier um einen induktiven Sensor in Form einer Kammstruktur, wie in Figur 3 dargestellt. Bei Einwirken einer Drucklast auf dieses induktive Sensorelement 3 verändert sich die Induktivität dieser Kammstruktur und die Induktivitätsänderung kann in ein elektrisches Signal S umgewandelt werden, welches ein Maß für die Druckbelastung darstellt. Die Verwendung eines induktiven Sensorelements 3 hat den Vorteil, dass gleichzeitig mit der Erfassung der Druckbelastung auch ein Feuchtigkeitseintritt detektiert werden kann, da sich die Induktivität bei Feuchtigkeitseinfall ebenfalls ändert, und zwar wesentlich stärker als bei einer Induktivitätsänderung durch Druckbelastung. Sollte der induktive Sensor ein sehr starkes Signal S anzeigen, besteht deshalb der Verdacht, dass Feuchtigkeit zum Sensorelement 3 vorgedrungen ist, was auf eine Undichtigkeit in der Isolierschicht 8 schließen lässt. Die erfindungsgemäße Anordnung 1 zur Erfassung der Schneelast auf dem Dach 2 kann daher gleichzeitig auch als Einrichtung zur Überprüfung der Dichtigkeit der Isolierschicht 8 verwendet werden.

Bei dem Sensorelement 3 kann es sich auch um ein resistives Sensorelement, beispielsweise um einen Dehnmessstreifen handeln, der in die Dämmstoffschicht 4 eingebettet oder an deren Unterseite befestigt ist. Bei Einwirken eines Drucks auf die Dämmstoffschicht 4 ändert sich der Widerstand des den Messstreifens und diese Widerstandsänderung wird in ein elektrisches Signal S umgewandelt, welche zur Erfassung des auf die Dämmstoffschicht 4 einwirkenden Drucks der Auswerteeinrichtung 5 zugeführt wird. Alternativ hierzu kann es sich bei dem Sensorelement 3 auch um einen piezo-resistiven Drucksensor handeln, der über ein PiezoElement verfügt, das bei Druckbelastung einen Piezo-Strom erzeugt, der proportional zu dem auf die Dämmstoffschicht 4 einwirkenden Druck ist und als Signal S der Auswerteeinrichtung 5 zugeführt wird.

## Patentansprüche

1. Anordnung (1) zur Erfassung einer Schneelast auf einem Dach (2) eines Gebäudes, welche auf dem Dach (2) angeordnet wird und ein Sensorelement (3) zur Erfassung der Schneelast aufweist, welches ein Signal (S) erzeugt, dessen Wert ein Maß für die auf dem Dach (2) liegende Schneelast ist, **dadurch gekennzeichnet, dass** die Anordnung (1) eine Schicht (4) aus einem Dämmstoff umfasst und dass das Sensorelement (3) an der Unterseite (4b) der Dämmstoffschicht (4) angeordnet oder in diese eingebettet ist.

2. Anordnung nach Anspruch 1, **dadurch gekennzeichnet, dass** das Sensorelement (3) ein elektrisches Signal (S) erzeugt, dessen Wert proportional zu der auf der Dämmstoffschicht (4) liegenden Schneelast ist.

3. Anordnung nach Anspruch 1 oder 2, **dadurch gekennzeichnet, dass** es sich bei dem Sensorelement (3) um ein kapazitives, reistives oder ein induktives Sensorelement handelt.

4. Anordnung nach einem der voranstehenden Ansprüche, **dadurch gekennzeichnet, dass** es sich bei der Dämmstoff-Schicht (4) um eine Schicht aus Styropor oder einem Schaumstoff handelt.

5. Anordnung nach einem der Ansprüche 1 bis 3, **dadurch gekennzeichnet, dass** es sich bei der Dämmstoff-Schicht (4) um eine Schicht aus einem Abstandsgestrick oder -gewirke handelt.

6. Anordnung nach einem der voranstehenden Ansprüche, **dadurch gekennzeichnet, dass** zumindest die Oberseite (4a) der Dämmstoffschicht (4) wasserdicht oder mit einer wasserdichten Schicht überdeckt ist.

7. Anordnung nach Anspruch 6, **dadurch gekennzeichnet, dass** das Sensorelement an der Unterseite (4b) der Dämmstoffschicht (4) angeordnet ist.

8. Anordnung nach einem der voranstehenden Ansprüche, **dadurch gekennzeichnet, dass** es sich bei dem Sensorelement (3) um einen Kondensator handelt, dessen Kapazität sich bei Einwirken einer Druckbelastung auf die Oberseite (4a) der Dämmstoffschicht (4) ändert.

9. Anordnung nach einem der Ansprüche 1 bis 7, **dadurch gekennzeichnet, dass** es sich bei dem Sensorelement (3) um einen induktiven Sensor handelt, dessen Induktivität sich bei Einwirken einer Druckbelastung auf die Oberseite (4a) der Dämmstoffschicht (4) oder bei Eintritt von Feuchtigkeit ändert.

10. Anordnung nach einem der Ansprüche 1 bis 7, **dadurch gekennzeichnet, dass** es sich bei dem Sensorelement (3) um einen piezo-resistiven Drucksensor handelt.

11. Anordnung nach einem der voranstehenden Ansprüche, **dadurch gekennzeichnet, dass** eine Auswerteinheit (5) vorgesehen ist, zu der das Signal (S) des Sensorelements (3) übermittelt und dort angezeigt wird.

12. Anordnung nach Anspruch 11, **dadurch gekennzeichnet, dass** die Auswerteeinheit (5) ein Warnsignal ausgibt, sobald die erfasste Schneelast einen vorgegebenen Grenzwert überschreitet.

13. Anordnung nach Anspruch 11, **dadurch gekennzeichnet, dass** das Signal (S) drahtlos an die Auswerteeinheit (5) übermittelt wird.

14. Dach (2) eines Gebäudes mit einer Dacheindeckung auf deren Oberseite eine Dämmstoffschicht (4) angeordnet ist, **dadurch gekennzeichnet, dass** ein abgegrenzter Flächenbereich der Dämmstoffschicht durch eine Anordnung (1) nach einem der voranstehenden Ansprüche gebildet ist.

15. Dach nach Anspruch 14, **dadurch gekennzeichnet, dass** die Dacheindeckung von einem Trapezblech (7) gebildet ist und dass die Dämmstoffschicht (4) auf dem Trapezblech (7) angeordnet ist.

16. Dach nach Anspruch 14 oder 15, **dadurch gekennzeichnet, dass** eine Mehrzahl von Anordnungen (1) nach einem der Ansprüche 1 bis 12 auf der Dacheindeckung vorgesehen ist, welche in regelmäßigen Abständen auf dem Dach (2)verteilt angeordnet sind.
